# EUROPEAN PATENT APPLICATION

(11) **EP 4 564 566 A1**
(43) Date of publication of application: **04.06.2025**
(21) Application number: 23846153.7
(22) Date of filing: 04.07.2023
(51) Int. Cl.: H01M 50/35, H01M 50/213, H01M 50/291, H01M 50/342, H01M 50/50, H01M 50/503, H01M 50/505

(54) **BATTERY PACK**

(30) Priority: 28.07.2022 JP 2022120151
(71) Applicant: Panasonic Intellectual Property Management Co., Ltd., Kadoma-shi, Osaka 571-0057 (JP)
(72) Inventor: KURAMITSU, Kazuki, Kadoma-shi, Osaka 571-0057 (JP)
(74) Representative: Novagraaf International SA
(86) International application number: PCT/JP2023/024835
(87) International publication number: WO 2024/024420

(57) **Abstract**

The present invention includes: a battery on which a cap that is a top surface of a sealing assembly and serving as an external terminal is provided on one side in a Z-axis direction and from which an internal gas is exhausted on the one side in the Z-axis direction when an internal pressure increases; a first holder that holds an end on the one side in the Z-axis direction of each of a plurality of the batteries aligned and includes an opening through which the cap is exposed; and a current collector that is provided on the one side of the first holder, partially covers the opening, and is connected to the cap. A first protrusion is formed on a surface of the first holder that is located on the one side in the Z-axis direction. The current collector is provided on the first holder in abutment with the first protrusion to form spacing between the current collector and the surface of the first holder that is located on the one side in the Z-axis direction.

## Description

### Technical Field

The present disclosure relates to a battery pack in which a plurality of batteries are stored.

### Background Art

In a battery pack, a plurality of batteries are stored in an outer covering case so as to support a device to be used. In a battery pack, a plurality of aligned batteries are held on a holder and electrically connected by a current collector (for example, Patent Literature (PTL) 1).

If thermal runaway occurs in a battery stored in the battery pack due to an anomaly, a high-temperature internal gas exhausted from the battery undergoing thermal runaway may contact a battery held on the same holder (hereinafter, a nearby battery) and cause thermal runaway in the nearby battery, which is a chain reaction of thermal runaway. Therefore, the internal gas exhausted from the battery undergoing thermal runaway needs to be reliably exhausted to the outside of the holder without contacting the nearby battery.

### Citation List

### Patent Literature

PTL 1: Unexamined Japanese Patent Publication No. 2022-002199

### Summary of Invention

For a battery, a gas exhaust valve is provided on one side in the longitudinal direction. With this configuration, when thermal runaway occurs, the internal pressure of the battery increases, and the gas exhaust valve is actuated so that the internal gas is exhausted on one side in the longitudinal direction. Meanwhile, there are instances where an external terminal is provided on one side in the longitudinal direction of a battery. Therefore, an opening through which the external terminal is exposed is provided in a holder that holds an end of the battery that is located on the one side in the longitudinal direction, and a collector lead of a current collector is connected to the external terminal exposed through the opening.

With the above-described configuration, when the internal gas of the battery is exhausted, the internal gas is exhausted through the opening of the holder. However, since the collector lead of the current collector partially covers the opening, there are instances where part of the exhaust gas is cut off by the collector lead. In recent years, wide collector leads have become more common because of increased battery size and output, and this tendency has become pronounced.

When the internal gas being exhausted is cut off by the collector lead, the exhaustion of the internal gas to the outside of the holder may be inhibited, and the high-temperature internal gas may flow into the holder and contact the nearby battery, resulting in thermal runaway of the nearby battery, which is a chain reaction of thermal runaway.

In view of the foregoing, an object of the present disclosure is to provide a battery pack capable of reliably exhausting, to the outside of a holder, a high-temperature internal gas exhausted from a battery when thermal runaway occurs in the battery.

A battery pack according to the present disclosure includes: a battery on which an external terminal is provided on one side in a longitudinal direction and from which an internal gas is exhausted on the one side in the longitudinal direction when an internal pressure increases; a holder that holds an end on the one side in the longitudinal direction of each of a plurality of the batteries aligned and includes an opening through which the external terminal is exposed; and a current collector that is provided on the one side of the holder, partially covers the opening, and is connected to the external terminal. A first protrusion is formed on a surface of the holder that is located on the one side in the longitudinal direction. The current collector is provided on the holder in abutment with the first protrusion to form spacing between the current collector and the surface of the holder that is located on the one side in the longitudinal direction.

With the battery pack according to the present disclosure, it is possible to reliably exhaust, to the outside of the holder, the high-temperature internal gas exhausted from the battery when thermal runaway occurs in the battery.

### Brief Description of Drawings

[Fig. 1] Fig. 1 is a perspective view illustrating a battery pack that is one example of an exemplary embodiment.
[Fig. 2] Fig. 2 is a cross-sectional view illustrating a battery pack that is one example of an exemplary embodiment.
[Fig. 3] Fig. 3 is a cross-sectional view illustrating a battery that is one example of an exemplary embodiment.
[Fig. 4] Fig. 4 is a plan view illustrating a holder and a current collector each of which is one example of an exemplary embodiment.
[Fig. 5] Fig. 5 is a plan view illustrating a holder and a current collector each of which is another example of an exemplary embodiment.

### Description of Embodiments

Hereinafter, one example of an exemplary embodiment of the present disclosure will be described in detail. In the following description, specific shapes, materials, directions, numerical values, etc., are mere examples for facilitating understanding of the present invention and can be changed, as appropriate, according to application, purpose, specifications, etc.

### <Battery Pack>

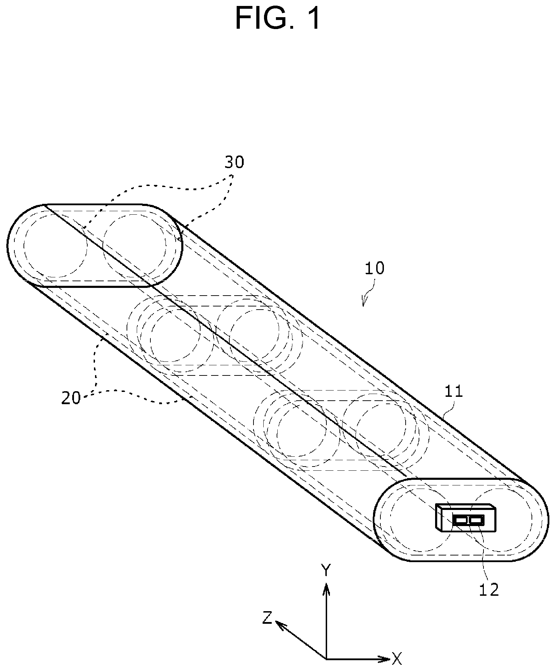

With reference to Fig. 1, battery pack 10, which is one example of the exemplary embodiment, will be described.

In battery pack 10, a plurality of battery blocks 20 are stored in outer covering case 11 so as to support a device to be used, and in each of the battery blocks 20, a plurality of batteries 30 (two batteries 30 in the example illustrated in Fig. 1) are fixed to each other on a holder and are stored in outer covering case 11. With battery pack 10, as will be described in greater detail below, when thermal runaway occurs in battery 30, the high-temperature internal gas exhausted from battery 30 can be reliably exhausted to the outside of the holder.

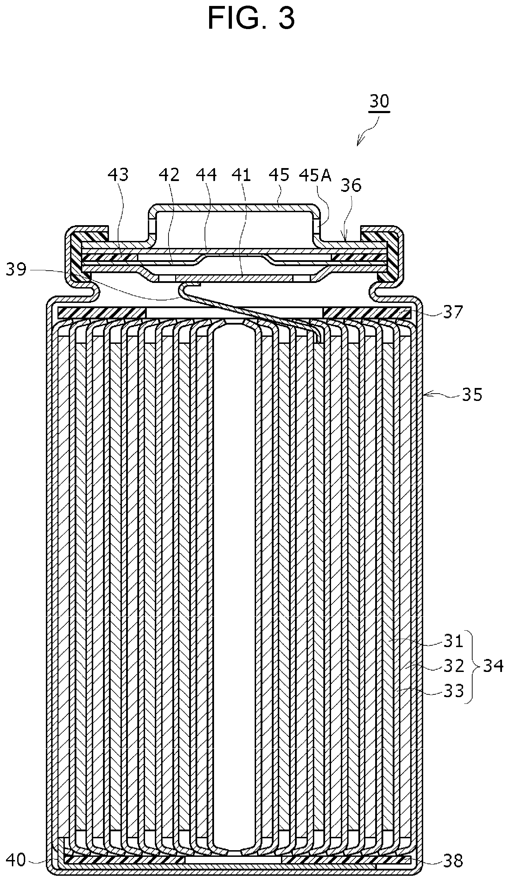

In the following description of each member, the longitudinal direction of battery 30 is denoted by a Z-axis direction, a direction that is perpendicular to the Z-axis direction and in which batteries 30 are arranged in battery block 20 is denoted by an X-axis direction, and a direction that is a perpendicular to the Z-axis and X-axis directions is denoted by a Y-axis direction. A side in the Z-axis direction on which cap 45 (refer to Fig. 3), which is a top plate of sealing assembly 36 (refer to Fig. 3) and serves as a positive terminal of battery 30, is provided will be referred to as one side, and the opposite side will be referred to as the other side.

Battery pack 10 is mainly used as a power supply for power usage. For example, battery pack 10 is used as a power supply for electric motor-driven devices such as an electric vehicle, an electric tool, an electric assisted bicycle, an electric motorcycle, an electric wheelchair, an electric tricycle, and an electric cart. Note that the use of battery pack 10 is not limited; for example, battery pack 10 may be used as a power supply for various electrical devices to be used inside and outside, other than the electric motor-driven devices, such as a cleaner, a radio, a lighting device, a digital camera, and a video camera.

Battery pack 10 includes: battery block 20 including a plurality of batteries 30 (two batteries 30 in the example illustrated in Fig. 1); and outer covering case 11 that stores a plurality of battery blocks 20.

Battery block 20 includes the plurality of batteries 30 aligned, which will be described in greater detail below. Battery pack 10, which includes the plurality of battery blocks 20 (three battery blocks 20 in the example illustrated in Fig. 1) connected in series, is configured to output a voltage corresponding to a device to be used. In battery block 20, the plurality of batteries 30 are connected in parallel. Battery block 20 will be described in greater detail below.

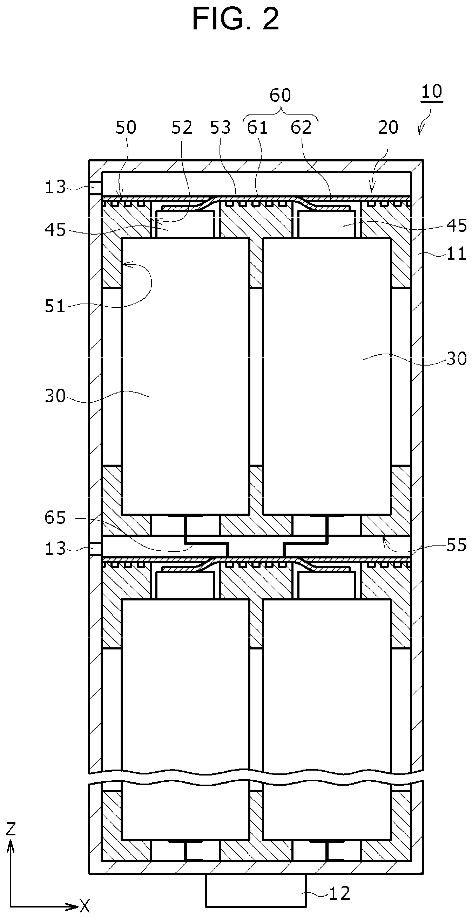

Outer covering case 11, which is made of metal such as aluminum, is formed into a cylindrical shape. Note that the material of outer covering case 11 is not limited to metal and may be resin. External pack terminal 12 electrically connected to battery block 20 is provided at an end of outer covering case 11 that is located on the other side in the Z-axis direction. External pack terminal 12 is used as a terminal that supplies a direct-current voltage when incorporated into a device on which battery pack 10 is mounted for use. Furthermore, external pack terminal 12 is also used to charge battery pack 10. In addition, exhaust hole 13 (refer to Fig. 2) through which the high-temperature internal gas exhausted from battery 30 undergoing thermal runaway is exhausted to the outside of battery pack 10 is provided in a side surface of outer covering case 11.

### <Battery Block>

With reference to Fig. 2, battery block 20, which is one example of the exemplary embodiment, will be described.

Battery block 20 includes: two batteries 30; first holder 50 as a holder that holds an end of each of two batteries 30 that is located on one side in the Z-axis direction; current collector 60 that abuts one surface of first holder 50 and is connected to cap 45 which is a top plate of sealing assembly 36 (refer to Fig. 3) and serves as an external positive terminal of battery 30, which will be described below; second holder 55 that holds an end of each of two batteries 30 that is located on the other side in the Z-axis direction; and collector lead 65 that is connected to a bottom of outer covering can 35 (refer to Fig. 3) serving as an external negative terminal of battery 30. Each of battery 30, first holder 50, and current collector 60 will be described in greater detail below. Out of the plurality of battery blocks 20 connected in series in battery pack 10, battery block 20 located at the far end on one side in the Z-axis direction includes current collector 60 corresponding to a total positive terminal, and battery block 20 located at the far end on the other side in the Z-axis direction includes collector lead 65 corresponding to a total negative terminal and electrically connected to external pack terminal 12 (not illustrated in the drawings).

### <Battery>

With reference to Fig. 2 and Fig. 3, battery 30, which is one example of the exemplary embodiment, will be described.

Battery 30, which is a cylindrical battery, is a lithium-ion battery. Note that battery 30 is not limited to the cylindrical battery and may be a prismatic battery, a laminated battery, or the like. Battery 30 may be an aqueous battery or may be a non-aqueous battery. A lithium-ion battery is preferably used as one example of the non-aqueous battery.

As illustrated in Fig. 3, in battery 30, cap 45 which is the top plate of sealing assembly 36 and serves as an external positive terminal is provided on one side in the Z-axis direction, and when the internal pressure increases during thermal runaway, the internal gas is exhausted through exhaust hole 45A of cap 45, as will be described in greater detail below. In other words, in battery 30, the internal gas is exhausted on one side in the Z-axis direction when the internal pressure increases.

Battery 30 includes: electrode assembly 34; an electrolyte (not illustrated in the drawings); and outer covering can 35 that stores electrode assembly 34 and the electrolyte. Electrode assembly 34, which includes positive electrode 31, negative electrode 32, and separator 33, has a wound structure in which positive electrode 31 and negative electrode 32 are wound in the form of a helix via separator 33. Outer covering can 35 is in the shape of a cylinder with a closed bottom that is open on one side in the Z-axis direction; the opening of outer covering can 35 is covered by sealing assembly 36.

Battery 30 includes insulating plates 37, 38 disposed respectively on top of and below electrode assembly 34. In the example illustrated in Fig. 3, positive electrode lead 39 attached to positive electrode 31 extends to sealing assembly 36 through a through-hole of insulating plate 37, and negative electrode lead 40 attached to negative electrode 32 extends on the outside of insulating plate 38 to the bottom of outer covering can 35. Positive electrode lead 39 is connected to the lower surface of internal terminal plate 41, which is the bottom plate of sealing assembly 36, by welding or the like, and cap 45, which is the top plate of sealing assembly 36 and is electrically connected to internal terminal plate 41, serves as an external positive terminal. Negative electrode lead 40 is connected to the inner surface of the bottom of outer covering can 35 by welding or the like, and the bottom of outer covering can 35 serves as an external negative terminal.

Sealing assembly 36 is structured such that inner terminal plate 41, lower valve body 42, insulating member 43, upper valve body 44, and cap 45 are stacked in sequence from the electrode assembly 34-side. Each of the members included in sealing assembly 36 is in the shape of a disc or a ring, for example, and the members other than insulating member 43 are electrically connected to each other. Lower valve body 42 and upper valve body 44 which constitute a so-called gas exhaust valve are connected to each other at the middle of each of lower valve body 42 and upper valve body 44, and insulating member 43 is interposed between peripheral parts of lower valve body 42 and upper valve body 44.

In the gas exhaust valve, when the internal pressure increases during thermal runaway of battery 30, lower valve body 42 is deformed in such a way as to push upper valve body 44 toward cap 45, and then ruptures to cut off an electric current path between lower valve body 42 and upper valve body 44. When the internal pressure further increases, upper valve body 44 ruptures, and the internal gas is exhausted through exhaust hole 45A formed in a side surface of a protruding portion of cap 45. Note that the present exemplary embodiment is not limiting; the gas exhaust valve may be provided at the bottom of outer covering can 35 that is located on the other side in the Z-axis direction so that when the internal pressure increases, the internal gas is exhausted on the other side in the Z-axis direction.

### <Holder>

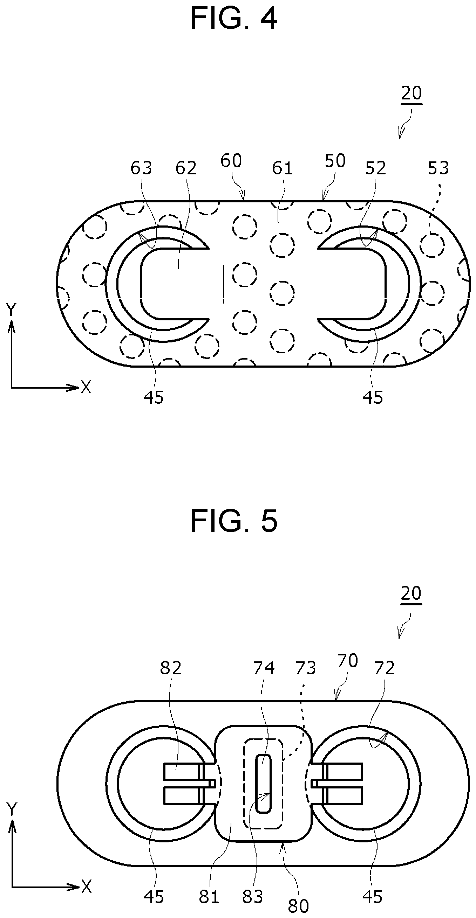

With reference to Fig. 2 and Fig. 4, first holder 50, which is one example of the exemplary embodiment, will be described.

First holder 50 holds an end of each of two batteries 30 that is located on one side in the Z-axis direction, as described above. Note that the number of batteries to be held on first holder 50 is not limited to that in the present exemplary embodiment.

First holder 50 may be formed of a high thermal conductive polyphenylene sulfide (PPS) resin, a resin containing a heat-dissipating filler, or a thermosetting resin that can be injection molded, for example. More specifically, first holder 50 may be formed of phenol resin, unsaturated polyester, unsaturated polyester mixed with an endothermic material, or the like. First holder 50 may be formed of an inorganic mineral such as mica or a material obtained by mixing an inorganic mineral such as mica into a resin material.

As illustrated in Fig. 2 and Fig. 4, first holder 50 is formed in the shape of an oval as viewed in the Z-axis direction and has a predetermined thickness in the Z-axis direction. First holder 50 includes: storage part 51 (refer to Fig. 2) that stores battery 30; opening 52 through which cap 45 serving as the external positive terminal of battery 30 is exposed; and a plurality of first protrusions 53 formed on the surface on one side in the Z-axis direction.

As illustrated in Fig. 2, storage part 51 is formed on a surface of first holder 50 that is located on the other side in the Z-axis direction. Storage part 51 is formed to be circular as viewed on the other side in the Z-axis direction, in the shape of a recess as viewed in the X-axis or Y-axis direction. An end of battery 30 that is located on one side in the Z-axis direction fits into storage part 51, and thus the end of battery 30 on the one side is held.

As illustrated in Fig. 2 and Fig. 4, opening 52 is formed penetrating storage part 51. More specifically, opening 52 is formed as a circular hole having a diameter less than the diameter of circular storage part 51 as viewed on the other side in the Z-axis direction. Note that storage part 51 and opening 52 are formed having the same center.

Through opening 52, cap 45, which is the top plate of sealing assembly 36 and serves as the positive terminal of battery 30, can be exposed, and cap 45 and current collector 60 can be connected. Furthermore, the internal gas exhausted from battery 30 during thermal runaway of battery 30 can be exhausted to the outside of first holder 50 through opening 52.

As illustrated in Fig. 4, first protrusion 53 is formed on the surface on one side in the Z-axis direction, as described above. A surface of first protrusion 53 that is located on one side in the Z-axis direction is formed flat, and main body 61 of current collector 60, which will be described below, is in abutment with said surface. The ratio of the area where first protrusions 53 are formed to the total area of the XY plane of first holder 50 is preferably 50% or less. The shape of first protrusion 53 is columnar in the present exemplary embodiment, but is not limited. Furthermore, the number of first protrusions 53 is not limited either.

When the internal pressure of battery 30 increases during thermal runaway of battery 30, the internal gas is exhausted through exhaust hole 45A (refer to Fig. 3) of cap 45, and the internal gas is exhausted through opening 52 of first holder 50. However, since opening 52 is partially covered by collector lead 62 of current collector 60, which will be described below, there are instances where part of the internal gas being exhausted is cut off by collector lead 62.

In the area where the internal gas being exhausted is cut off by collector lead 62, the internal gas may flow into first holder 50, and the high-temperature internal gas may contact battery 30 held within first holder 50, resulting in thermal runaway of battery 30 held within first holder 50, which is a chain reaction of thermal runaway.

With first protrusion 53, spacing is formed between first holder 50 and current collector 60, and in the area where opening 52 of first holder 50 is covered by collector lead 62 of current collector 60, the internal gas exhausted from battery 30 can be reliably exhausted to the outside of first holder 50 through the spacing. Thus, it is possible to avoid a chain reaction of thermal runaway that is a situation where when thermal runaway occurs in one battery 30 in battery block 20, the internal gas flows into first holder 50 and thermal runaway occurs in battery 30 held within first holder 50.

Note that the present exemplary embodiment is not limiting; with a configuration in which a gas exhaust valve is provided at the bottom of outer covering can 35 that is located on the other side in the Z-axis direction so that when the internal pressure increases, the internal gas is exhausted on the other side in the Z-axis direction, first protrusion 53 may be provided on second holder 55.

### <Current Collector>

With reference to Fig. 4, current collector 60, which is one example of the exemplary embodiment, will be described.

Current collector 60 is provided on one side of first holder 50 and connected to cap 45 serving as the external positive terminal of battery 30. More specifically, current collector 60 connects caps 45 serving as the positive terminals of two batteries 30 held on first holder 50. Current collector 60 is formed of a metal sheet such as an aluminum sheet or a copper sheet, for example. Current collector 60 includes: main body 61 that abuts first protrusion 53, which will be described below, of first holder 50; and collector lead 62 that is connected to cap 45.

Main body 61, which has substantially the same shape as the oval shape of first holder 50 as viewed in the Z-axis direction, is provided on first holder 50 in abutment with first protrusion 53 of first holder 50. In main body 61, opening 63 is formed at a position corresponding to opening 52 of first holder 50. Furthermore, another collector lead 65 or the like that is connected to the negative terminal of another battery block 20 is connected to main body 61.

Collector lead 62 extends from the edge of opening 63, is joined to cap 45 by welding, and is thus electrically connected to cap 45. As described above, collector lead 62 partially covers opening 52 of first holder 50.

### <Conclusion>

Battery pack 10 according to the present exemplary embodiment includes: battery 30 on which cap 45 that is a top plate of sealing assembly 36 and serves as an external positive terminal is provided on one side in the Z-axis direction and from which the internal gas is exhausted through exhaust hole 45A of cap 45 when the internal pressure increases; first holder 50 that holds an end on the one side in the Z-axis direction of each of a plurality of batteries 30 aligned and includes opening 52 through which cap 45 is exposed; and current collector 60 that is provided on one side of first holder 50, partially covers opening 52, and is connected to cap 45. First protrusion 53 is formed on a surface of first holder 50 that is located on one side in the Z-axis direction. Current collector 60 is provided on first holder 50 in abutment with first protrusion 53 to form spacing between current collector 60 and the surface of first holder 50 that is located on one side in the Z-axis direction.

With this configuration, the internal gas exhausted from battery 30 during thermal runaway of battery 30 is exhausted to the outside of first holder 50 by passing, without being blocked by collector lead 62, through the spacing formed between current collector 60 and the surface of first holder 50 that is located on one side in the Z-axis direction. Thus, it is possible to avoid a chain reaction of thermal runaway that is a situation where when thermal runaway occurs in one battery 30 in battery block 20, the high-temperature internal gas flows into first holder 50 and contacts battery 30 held within first holder 50, and thermal runaway occurs in battery 30 held within first holder 50.

### <Another Exemplary Embodiment>

With reference to Fig. 5, first holder 70 and current collector 80, each of which is another example of the exemplary embodiment, will be described.

First holder 70 includes: a storage part (not illustrated in the drawings); opening 72; first protrusion 73 formed on a surface located on one side in the Z-axis direction; and second protrusion 74 formed on a surface of first protrusion 73 that is located on one side in the Z-axis direction. The storage part and opening 72 are substantially the same as storage part 51 and opening 52 of first holder 50 described above and therefore, description thereof will be omitted.

First protrusion 73 is formed on the surface on one side in the Z-axis direction, at a position located in the middle between one opening 72 and the other opening 72 of first holder 70 in the X-axis direction. First protrusion 73 is formed in the shape of a rectangle with round corners as viewed in the Z-axis direction. Main body 81 of current collector 80, which will be described below, is in abutment with the surface of first protrusion 73 that is located on one side in the Z-axis direction. As a result, spacing is formed between first holder 70 and current collector 80, and in the area where opening 72 of first holder 70 is covered by collector lead 82 of current collector 80, the internal gas exhausted from battery 30 can be reliably exhausted to the outside of first holder 70.

Second protrusion 74 is formed on the surface on one side in the Z-axis direction, at a position located in the middle of first protrusion 73 in the X-axis and Y-axis directions. Second protrusion 74 is formed in the shape of a rectangle with round corners as viewed in the Z-axis direction. Positioning opening 83 of current collector 80, which will be described below, fits on the surface of second protrusion 74 that is located on one side in the Z-axis direction. Thus, current collector 80 is positioned with respect to first holder 70.

Current collector 80 is provided on one surface of first holder 70 and connected to cap 45 serving as the external positive terminal of battery 30. More specifically, current collector 80 connects caps 45 serving as the positive terminals of batteries 30 held on first holder 70. Current collector 80 is formed of a metal sheet such as an aluminum sheet or a copper sheet, for example. Current collector 80 includes: main body 81 that abuts the surface of first protrusion 73 that is located on one surface in the Z-axis direction; and collector lead 82 that is connected to cap 45.

Main body 81, which is formed in the shape of a square with rounded corners as viewed in the Z-axis direction, is in abutment with first protrusion 73 of first holder 70. Furthermore, collector lead 65 or the like that is connected to the negative terminal of another battery block 20 is connected to main body 81. Moreover, positioning opening 83 is formed at a position located in the middle of main body 81 in the X-axis and Y-axis directions. Second protrusion 74 described above fits into positioning opening 83.

Collector lead 82 extends from main body 81, is joined to cap 45 by welding, and is thus electrically connected to cap 45. As described above, collector lead 82 partially covers cap 45 exposed through opening 72 of first holder 70.

Note that the shape, size, etc., of main body 81 are not limited to those in the present exemplary embodiment; the overall shape of current collector 80 may be a square frame as viewed in the Z-axis direction with positioning opening 83 increased in size together with main body 81 until positioning opening 83 covers at least part of one opening 72 and the other opening 72 of first holder 70. In this situation, instead of first protrusion 73 and second protrusion 74, first protrusion 53 described above is formed on the surface of first holder 70 that is located on one side in the Z-axis direction, and main body 81 is brought into abutment with first protrusion 53. As a result, spacing is formed between first holder 70 and current collector 80, and the internal gas exhausted from battery 30 can be reliably exhausted to the outside of first holder 70.

Note that the present disclosure is not limited to the exemplary embodiment and variations thereof described above; it goes without saying that various changes, improvements, etc., can be carried out within the scope of recitations in the claims in the present application.

### Reference Signs List

- 10: battery pack

- 11: outer covering case
- 12: external pack terminal
- 13: exhaust hole
- 20: battery block
- 30: battery
- 31: positive electrode
- 32: negative electrode
- 33: separator
- 34: electrode assembly
- 35: outer covering can
- 36: sealing assembly
- 37: insulating plate
- 38: insulating plate
- 39: positive electrode lead
- 40: negative electrode lead
- 41: internal terminal plate
- 42: lower valve body
- 43: insulating member
- 44: upper valve body
- 45: cap (external positive terminal)
- 45A: exhaust hole
- 50: first holder
- 51: storage part
- 52: opening
- 53: first protrusion
- 55: second holder
- 60: current collector
- 61: main body
- 62: collector lead
- 63: opening
- 65: collector lead
- 72: opening
- 73: first protrusion
- 74: second protrusion
- 80: current collector
- 81: main body
- 82: collector lead
- 83: positioning opening

## Claims

1. A battery pack comprising:
a battery including one side end in a longitudinal direction of the battery, the battery including an external terminal at the one side end of the battery, the battery allowing an internal gas to be exhausted from the one side end when a pressure inside the battery increases;
a holder that holds the one side end of each of a plurality of the batteries aligned and includes an opening through which the external terminal is exposed; and
a current collector that is provided on one side end of the holder, partially covers the opening, and is connected to the external terminal, wherein
the holder includes a first protrusion protruding from a surface of the one side end of the holder, and
the current collector is provided on the holder in abutment with the first protrusion to form spacing between the current collector and the surface of the one side end of the holder.

2. The battery pack according to claim 1, wherein
the first protrusion includes a second protrusion protruding from a surface of one side end of the first protrusion in the longitudinal direction,
the current collector includes an opening into which the second protrusion fits, and
when the opening fits on the second protrusion, the current collector is positioned with respect to the holder.
